# EUROPEAN PATENT SPECIFICATION

(11) **EP 3 915 811 B1**
(45) Date of publication and mention of the grant of the patent: **16.08.2023**
(21) Application number: 20465528.6
(22) Date of filing: 29.05.2020
(51) Int. Cl.: B60C 19/00, B60C 19/12

(54) **TYRE PUNCTURE DETECTION SYSTEM**
SYSTEM ZUR ERKENNUNG VON REIFENDURCHSTICHEN
SYSTÈME DE DÉTECTION DE CREVAISON DE PNEUMATIQUE

(43) Date of publication of application: 01.12.2021
(73) Proprietor: Continental Automotive Technologies GmbH, 30165 Hannover (DE)
(72) Inventor: Cimponeriu, Andrei-Stefan, 81737 München (DE); Cristea, Florin Mihai, 81737 München (DE)
(74) Representative: Continental Corporation

(56) References cited:
- EP-A2- 1 896 822
- DE-A1-102016 203 379
- DE-A1-102018 200 104
- DE-A1-102018 217 583

## Description

The present invention relates to a tyre puncture detection system.

Vehicle tyres, which are most commonly air or gas-filled pneumatic tyres, provide static friction or frictional grip between the tyre and the surface. It is useful to monitor the pneumatic tyre to detect a puncture in the tyre in order to be able to provide a warning to the driver of the vehicle. Various approaches have been used.

WO 2018/054584 A2 discloses a sensor element for a puncture detection system which is positioned within the cavity of a tyre, between the innerliner and the sealant at the tread belt. It uses a wire structure, and contacting it involves wires and contacts, which are problematic when bending and oxidation occur inside a tire. US 2007/022805 A1 discloses a tire monitor for a vehicle that includes a sensor disposed in the tire, a power supply connecting a first and second ends of the sensor, the power supply applying a predetermined effort across the first and second ends and causing a flow through the sensor, a meter disposed operably to the sensor to measure the flow and output a value substantially proportional to the flow, and a transmitter disposed operably to the meter to transmit the value to a vehicle information system. The flow is reduced by a damage to the tire.

EP 1 356 957 A2 discloses a pneumatic tyre with inner sensor units for determining operating parameters of the tire. The sensors can select measured values and are attached to a fibre network which is vulcanized into the tire. The network fibres are electrically conducting and can be connected to a central unit. The connection between the central unit and the sensor units is such that individual sensors can be interrogated by the central unit. The latter contains a storage unit for the measured values, and a transponder. The sensors pick up temperature, pressure and mechanical loading.

FR 2 897 015 A discloses a tyre with a tyre rolling state monitoring device that is arranged to detect a state of puncture of the tire. A tire re-inflating system reconditions the punctured tire in the rolling state. The tyre re-inflating system is in communication with the monitoring device such that the re-inflating system is activated in the event of detection of the state of tyre puncture.

DE 10 2016 203 379 A1 discloses a tyre with a tyre puncture detection system which comprises a tyre module arranged on the inside of the tyre and in which a tyre pressure measuring system with a pressure sensor, an electronic component with an active transmitting element and a memory are arranged. Further, a self-sealing viscous material layer is arranged on the inside of the tyre and lies directly against the tire inner core. The self-sealing viscous material layer consists of an electrically conductive material and the tyre inner core is made of a non-conductive rubber material. Below the tyre inner core, a second conductive material layer of a conductive rubber material is arranged. Both conductive material layers are electrically insulated via the tyre inner core. The tyre module is connected to both conductive material layers via cables. If a pointed object penetrates the tyre inner core, an electrical short circuit is formed between the two conductive material layers and detected by the tyre module.

These systems all use wired connections between the sensor that is embedded in the tyre and a detection or sensing system or embedded electronic devices. These wired connections and embedded electronic devices are prone to damage leading to an unreliable tyre monitoring system.

Further improvements to tyre detection systems for pneumatic vehicle tyres to improve the reliability and robustness of the system would be desirable.

According to the invention, a tyre puncture detection system is provided that comprises a sensor, a sensing system and an inductance measuring circuit. The sensor comprises a first conductive layer, a second conductive layer and an insulating layer, the insulating layer being arranged between and electrically isolating the first conductive layer and the second conductive layer from one another. The sensing system comprises a transformer configuration having a primary winding and a secondary winding, wherein the primary winding is provided by a first coil having a first inductance and the secondary winding is provided by a second coil having a second inductance. The second coil is connectable to the sensor and being sized and shaped to be arranged on an inner surface of the tyre. The first coil is magnetically coupled to the second coil. The inductance measuring circuit is coupled to the first coil and is configured to measure a change in the inductance of the first coil caused by a change in load or inductance of the second coil that is caused by a puncture in the tyre.

The sensing circuit has the setup of a transformer, with the first coil as its primary winding and the second coil as its secondary winding. The primary winding or the first coil is connected to a very sensitive inductance measuring circuit. The secondary winding formed by the second coil is connected to the conductive layers and has the puncture sensor as its load. The first coil together with the required electronics, including the inductance measuring circuit, can be placed inside an enclosure, on top of the second coil. The second coil is physically separated but magnetically coupled to the first coil and has its ends connected to the two conductive layers of the sensor. Because of the magnetic coupling between the two coils, by measuring a change of the inductance or losses of the first coil, a change in the load or inductance of the second coil that is caused by a puncture in the tyre can be sensed.

When there is no puncture, the load in the first coil is an open circuit in DC and a high impedance Z - a possibly lossy capacitor in AC. When a puncture occurs, the contact between the two conductive layers provides a current between the two layers. This contact connection is seen as an increased load to the first coil within the tyre and, via the transformer effect, as a decreased equivalent inductance and increased losses of the first coil.

Since the first and second coil are coupled magnetically but physically separated, , physical or wire electrical connections between the first and second coils and, therefore, between the sensor and the inductance measuring system are avoided so that issues, such as poor mechanical robustness, poor reliability, limited allowable temperature range and ageing, that are associated with physical contacts and connections between the sensor and the detection system are avoided. Therefore, a system is provided which is more robust and reliable than a system which has wire connections between the sensor element and the detection system.

The tyre puncture detection system according to the invention may be provided in the form of a kit of parts for assembling the system in and on the pneumatic tyre of the vehicle, the wheel rim of the vehicle and/or other parts of the vehicle. The system may also be provided in a partially assembled or in an assembled form and include a pneumatic tyre, onto which the sensor and second coil are attached or integrated. For example, the sensor and the second coil may be arranged or formed on an inner surface of the tyre, whereas the first coil is spaced apart from the sensor and second coil, for example arranged in an electronic module so that there is no resistive connection between the first and second coils, but only a magnetic coupling between the first and second coils. The inductance measuring circuit may be coupled to the first coil by a wired connection and may be arranged on the inner surface of the pneumatic tyre, on top of the second and the sensor so that a magnetic coupling between the two coils exist.

In some embodiments, the second coil is built as part of the first conductive layer and has its first end electrically connected to it, and the second end electrically connected to the second conductive layer. The connection to the second conductive layer can be made by a vertical conductive connection that extends from the centre of the coil, through the electrically insulating layer, to the second conductive layer.

In some embodiments, the first and second conductive layers are formed from electrically conductive rubber and the insulating layer is formed from electrically insulating rubber. The rubber composition may be similar to the rubber composition of the tyre into which the sensor is to be embedded but should have conductivity low enough not to prevent puncture sensing.

In some embodiments, the second coil is a planar spiral coil formed of conductive material. The conductive material may be a metal such as copper, for example. In some embodiments, the second coil is also a planar spiral coil formed of conductive material. The conductive material may be a metal such as copper, for example.

In some embodiments, the second coil is formed of the same material as the first conductive layer of the sensor, for example electrically conductive rubber.

The form of a planar spiral for the first and/or second coil has the advantage that the first and second coil occupy less space than a solenoid or helical type coil and can be more easily mounted on the inner surface of the tyre.

In some embodiments, the second coil is coplanar with the first conductive layer. This arrangement is useful for a planar coil to provide a compact arrangement.

In some embodiments, the second coil is formed on the electrically insulating layer. This enables the electrically insulating layer to act as both a mechanical support for the second planar coil and also as electrical isolation between the first and second conductive layers of the sensor. In some embodiments, the second coil is arranged in an opening of the first conductive layer. This arrangement is even more space saving.

In some embodiments, the second coil is formed on the electrically insulating layer adjacent to a peripheral edge of the first conductive layer of the sensor. This arrangement may be useful if the first coil is to be positioned laterally adjacent to the sensor, for example for space or design reasons.

In some embodiments, the first end of the second coil is integral with the first conductive layer. The second coil may be formed by patterning the first conductive layer such that the first end of the first coil is integral with the first conductive layer.

In some embodiments, the first end of the second coil is resistively connected with the first conductive layer by an additional electrically conductive connector, for example a bond wire or solder connection.

In some embodiments, the inductance measuring circuit, which is used to measure the inductance of the first coil providing the primary winding of the transformer configuration, is an inductance to digital converter module. In some embodiments, the inductance to digital converter module has a sensitivity of 10⁻⁴ H. For example, the inductance to digital converter module LDC1612 which is commercially available from Texas Instruments may be used, as it has an extremely high resolution.

In some embodiments, the first coil is a planar coil, e.g. a planar spiral coil, formed on a surface of a substrate or in a substrate. The planar coil may be formed in a metal layer formed on or in the substrate.

In some embodiments, the substrate is a circuit board and the inductance measuring circuit is mounted on the circuit board. For example, the substrate may be a circuit board and the first coil be formed as a planar spiral in a metal layer of the circuit board. The inductance measuring circuit, such as an inductance to digital converter module, can be mounted on the circuit board and electrically connected to the first coil by wire or solder connections.

In some embodiments, the inductance measuring system is arranged in a housing of an electronic module. In some embodiments, the electronic module further comprises one or more modules for monitoring tyre pressure and/or tyre temperature. The electronic module may be a Tyre Parameter Monitoring System (TPMS), for example.

In some embodiments, the system further comprises a transmitter for transmitting a signal. The transmitter may be located within the electronic module. The signal may be transmitted wirelessly to another unit of the vehicle which may emit a warning signal to the driver that the tyre has a puncture so that the driver can take appropriate action, for example decelerating and parking the vehicle.

In some embodiments, the tyre puncture detection system further comprises a pneumatic tyre. The sensor including the first conductive layer, the second conductive layer and the insulating layer and the second coil are arranged on an inner surface of the tyre. The first coil is arranged on the inner surface of the tyre and spaced apart from the second coil so that the first coil is only magnetically coupled with the second coil and a contactless magnetic coupling between the first and second coil is provided.

The inductance measuring circuit and/or electronic module if used may also be arranged on an inner surface of the tyre or on an inner liner of the tyre. Alternatively, the electronic module may be arranged on the wheel rim onto which the pneumatic tyre including the sensor and second coil is mounted.

Embodiments will now be described with reference to the drawings.
- Figure 1a: illustrates a cross-sectional view of a pneumatic tyre including a tyre puncture detection system according to an embodiment.
- Figure 1b: illustrates a top view of a sensor of the tyre puncture detection system of Figure 1a.
- Figure 2: illustrates a diagram demonstrating the principle of operation of the contactless puncture detection system.
- Figure 3: illustrates the operation of the contactless puncture detection system.

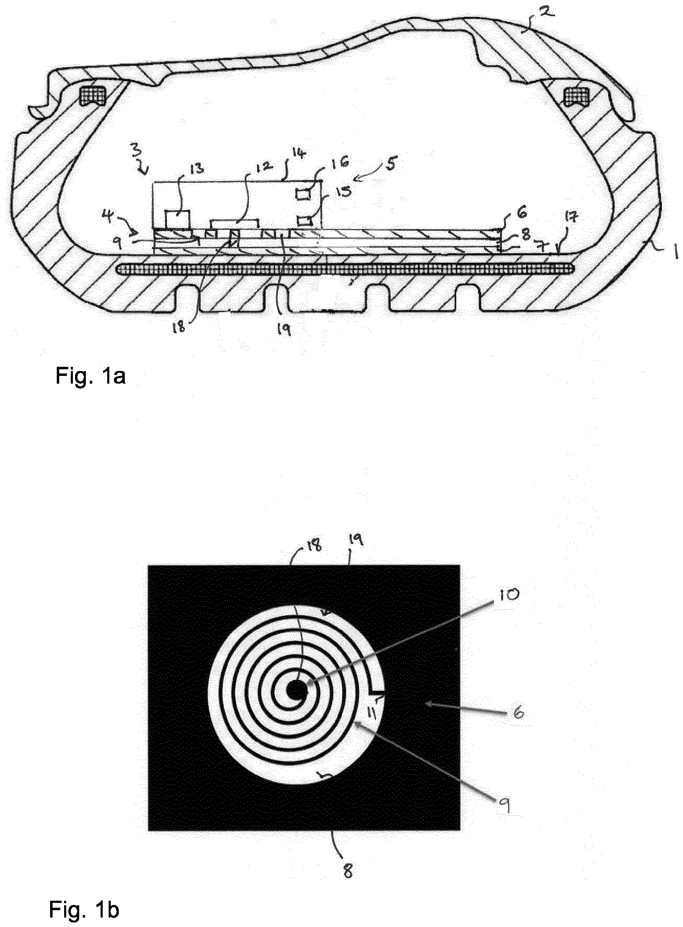

Figure 1a illustrates a cross-sectional view of a pneumatic tyre 1 fitted onto a wheel rim 2. The pneumatic tyre 1 comprises a tyre puncture detection system 3 which comprises a sensor 4 positioned on the inner surface 17 of the tyre 1 and a sensing system 5 also arranged on an inner surface 17 of the tyre 1. The sensing circuit or sensing system 5 has a transformer configuration with a primary winding and a second winding that are physically separate, but magnetically coupled.

The sensor 4 comprises a first conductive layer 6, a second conductive layer 7 and an insulating layer 8 that are arranged in a stack to form a sandwich type structure, as can be seen in figure 1a. The insulating layer 8 is arranged between and electrically isolates the first conductive layer 6 and the second conductive layer 7 from one another. The second conductive layer 7 is arranged on the inner surface 17 of the tyre 17, the insulating layer 8 on the second conductive layer and the first conductive layer 6 on the insulating layer 8. The first conductive layer 6 and the second conductive layer 7 may be formed of electrically conductive rubber and the insulating layer 8 from electrically insulating rubber.

The sensing circuit or sensing system 5 has a transformer configuration with a primary winding and a second winding that are physically separate, but magnetically coupled. The sensing system 5 includes a first coil 12 that provides the primary winding and a second coil 9 that provides the secondary winding.

The second coil 9 has a second inductance and is connectable to the sensor 4. The second coil 9 is formed in the first conductive layer 6 that is arranged further away from the inner surface 17 of the tyre 1 than the second conductive layer 7. The second coil 9 has a first end 11 which is resistively connected to the first conductive layer 6 and a second end 10 which is resistively connected to the second conductive layer 7. The second coil 9 is formed of the same material as the first conductive layer 6, for example electrically conductive rubber.

As can be seen in the top view of Figure 1b, the second coil 9 is a planar coil and may have a planar spiral form. The second end 10 may be at the centre and the first end 11 at the edge of the of the planar spiral coil 9. The second end 10 is connected to the underlying second conductive layer 7 by a vertical conductive connection 18 that extends through the thickness of the insulating layer 8. In some embodiments, the second coil 9 is formed by patterning from the first conductive layer 6 so that the first end 11 is integral with the first conductive layer 6. The second planar spiral coil 9 may be supported by the underlying electrically insulating layer 8. The second planar spiral coil 9 is arranged in an opening 19 of the first conductive layer 6. The opening 19 is substantially circular so that the planar spiral second coil 9 is laterally surrounded by the first conductive layer 6. In other embodiments, the second planar spiral coil 9 is formed on the insulating layer 8 and positioned laterally adjacent the peripheral edge of the first conductive layer 6.

The detector system 5 comprises the first coil 12 having a first inductance that provide the primary winding of the transformer setup. The first coil 12 is magnetically coupled to the second coil 9 that provides the secondary winding of the transformer setup. The first coil 12 is spaced apart from the second coil 9 so that there is only a contactless magnetic coupling between the first and second coils 12, 9. In some embodiments, the first coil 12 is formed by conductive deposition or by a conductive rubber strip of appropriate shape. The first coil 12 may be formed in a metal layer and have the form of a planar spiral for example. The detector system 5 further comprises an inductance measuring circuit 13 coupled to the first coil 12 that is configured to detect a change in the load or first inductance of the first coil 12. In particular, the inductance measuring circuit 13 is configured to detect a change in the load or first inductance of the first coil 12 that is caused by a change in the load or second inductance of the second coil 9 that is in turn caused by a puncture in the tyre 1.

The first coil 12 and the inductance measuring circuit 13 are arranged separately and spaced part from the second coil 9. The first coil 12 and the inductance measuring circuit 13 may be arranged in an electronic module 14 that is arranged on the inner surface 17 of the tyre 1. The inductance measuring circuit 13 may be a sensitivity inductance-to-digital circuit, such as the inductance to digital module LDC161x that is commercially available from Texas Instruments. For example, the inductance to digital circuit may have a sensitivity of 10⁻⁴ H.

The first and second coils 12, 9 are separated by the lower wall of the housing of the electronic module 14 and any rubber container that holds the electronic module 14 on the inner surface 17 of the tyre 1.

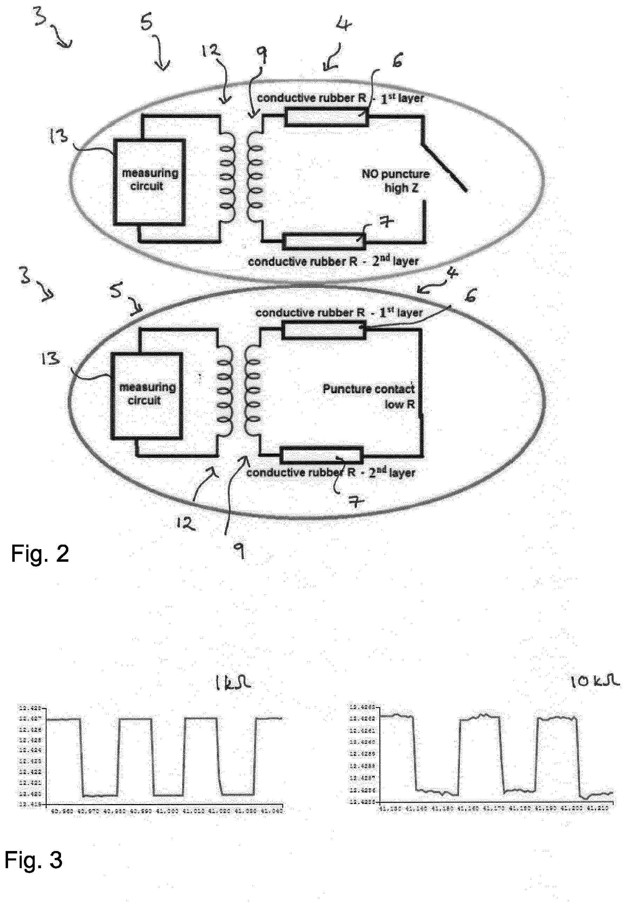

Referring to figure 2, the wireless transmission method between the sensor 4 and the detector system 5 will now be described. The first and second coils 12, 9 behave like a transformer. When there is no puncture in the tyre 1, the load in the second coil 9 is an open circuit in DC and a high impedance Z - a possibly lossy capacitor in AC. When a puncture occurs, the contact between the two conductive layers 6, 7 provides a current between these two layers 6, 7 which is seen as an increased load to the second coil 9. The transformer effect means that the first and second coils 12, 9 are magnetically or inductively coupled, but not resistively coupled. The transformer effect means that the increased load in the second coil 9 caused by the puncture in the tyre 1 causes an increased load and decreased resonating frequency and equivalent inductance of the first coil 12. The decrease in load or first inductance of the first coil 12 is sensed by the inductance measuring circuit 13, thus providing the occurrence-of-puncture information.

The electronic module 14 may further comprise a transmitter 16 for transmitting a signal. The signal may be transmitted wirelessly to another unit of the vehicle which may emit a warning signal to the driver that the tyre has a puncture so that the driver can take appropriate action, for example decelerating and parking the vehicle.

Figure 3 illustrates the operation of the contactless puncture detection system and illustrates two examples of inductance values of the second coil 12 arranged in the electronic module 14 when the load of the second coil 9 arranged on or embedded in the tyre 1 changes form open circuit (no puncture) to 1kΩ and respectively 10kΩ, for a distance between the coils 9, 12 of 2mm.

The electronic module 14 may comprise one or more further modules 15 for monitoring tyre pressure and/or tyre temperature. The electronic module 14 may be a Tyre Pressure Monitoring System (TPMS), for example.

## Claims

1. A tyre puncture detection system (3), comprising:
a sensor (4) for attaching to the tyre (1) and a sensing system (5), wherein the sensor (4) comprises:
a first conductive layer (6);
a second conductive layer (7), and
an insulating layer (8), wherein the insulating layer (8) is arranged between and electrically isolates the first conductive layer (6) and the second conductive layer (7) from one another,
**characterized in, that**
the sensing system (5) comprises a transformer configuration having a primary winding and a secondary winding, wherein the primary winding is provided by a first coil (12) having a first inductance and the secondary winding is provided by a second coil (9) having a second inductance, the second coil (9) being connectable to the sensor (4) and being sized and shaped to be arranged on an inner surface of the tyre (1), wherein the first coil (12) is magnetically coupled to the second coil (9),
wherein the tyre puncture detection system (3) further comprises
an inductance measuring circuit (13) coupled to the first coil (12),
wherein the inductance measuring circuit (13) is configured to measure a change in the inductance of the first coil (12) caused by a change in load or inductance of the second coil (9) that is caused by a puncture in the tyre (1).

2. A tyre puncture detection system (3) according to claim 1, wherein a puncture in the tyre (1) results in a resistive connection between the first and second conductive layers (6, 7) of the sensor (4) that causes an increased load and a lower impedance in the second coil (12) and causes an increased load and a lower impedance in the first coil (12) due to the magnetic coupling between the second coil (9) and the first coil (12), wherein the increased load and the lower impedance in the first coil (12) are detected by the inductance measuring circuit (13).

3. A tyre puncture detection system (3) according to claim 1 or claim 2, wherein the second coil (9) has a first end (11) electrically connected to the first conductive layer (6) and a second end (10) electrically connected to the second conductive layer (7).

4. A tyre puncture detection system (3) according to one of claims 1 to 3, wherein the second coil (9) is a planar spiral coil formed of conductive material.

5. A tyre puncture detection system (3) according to claim 4, wherein the second coil (9) is coplanar with the first conductive layer (6).

6. A tyre puncture detection system (3) according to one of claims 1 to 5, wherein the second coil (9) is formed on the electrically insulating layer (8) and in an opening (19) of the first conductive layer (6).

7. A tyre puncture detection system (3) according to one of claims 3 to 6, wherein the first end (11) of the second coil (9) is integral with the first conductive layer (6).

8. A tyre puncture detection system (3) according to one of claims 1 to 7, wherein the first and second conductive layers (6, 7) are formed from electrically conductive rubber and the insulating layer (8) is formed from electrically insulating rubber.

9. A tyre puncture detection system (3) according to one of claims 1 to 8, wherein the inductance measuring circuit (13) comprises an inductance to digital conversion module.

10. A tyre puncture detection system (3) according to claim 9, wherein the inductance to digital module is configured to measure variations in inductance of 10⁻⁴ H and higher.

11. A tyre puncture detection system (3) according one of claims 1 to 6, wherein the inductance measuring circuit (13) and the first coil (12) are arranged in a housing of an electronic module (14).

12. A tyre puncture detection system (3) according to one of claims 1 to 7, wherein the first coil (12) is a planar spiral coil formed on a surface of a substrate or in the substrate.

13. A tyre puncture detection system (3) according claim 11 or claim 12, wherein the electronic module (14) further comprises one or more modules for monitoring tyre pressure and/or tyre temperature.

14. A tyre puncture detection system (3) according to one of claims 1 to 13, further comprising a transmitter for transmitting a signal.

15. A tyre puncture detection system (3) according to one of claims 1 to 14, further comprising a pneumatic tyre (1), wherein the sensor (4) and the second coil (9) are arranged on an inner surface of the tyre (1) and the first coil (12) is positioned on an inner surface (17) of the tyre (1) and spaced apart from the first coil (9) so that the first coil (12) is only magnetically coupled with the second coil (9).

## Patentansprüche

1. Reifendurchstichdetektionssystem (3), das Folgendes aufweist:
einen Sensor (4) zur Befestigung an dem Reifen (1) und ein Erfassungssystem (5), wobei der Sensor (4) Folgendes aufweist:
eine erste leitfähige Schicht (6);
eine zweite leitfähige Schicht (7) und
eine isolierende Schicht (8), wobei die isolierende Schicht (8) zwischen der ersten leitfähigen Schicht (6) und der zweiten leitfähigen Schicht (7) angeordnet ist und diese vor elektrisch voneinander isoliert,
**dadurch gekennzeichnet, dass**
das Erfassungssystem (5) eine Transformatorkonfiguration mit einer Primärwicklung und einer Sekundärwicklung aufweist, wobei die Primärwicklung durch eine erste Spule (12) mit einer ersten Induktivität bereitgestellt wird und die Sekundärwicklung durch eine zweite Spule (9) mit einer zweiten Induktivität bereitgestellt wird, wobei die zweite Spule (9) mit dem Sensor (4) verbunden werden kann und dahingehend abgemessen und geformt ist, an einer Innenfläche des Reifens (1) angeordnet zu werden, wobei die erste Spule (12) magnetisch mit der zweiten Spule (9) gekoppelt ist,
wobei das Reifendurchstichdetektionssystem (3) ferner Folgendes aufweist:
eine Induktivitätsmessschaltung (13), die mit der ersten Spule (12) gekoppelt ist, wobei die Induktivitätsmessschaltung (13) dazu ausgebildet ist, eine Änderung der Induktivität der ersten Spule (12) zu messen, die durch eine durch einen Durchstich in dem Reifen (1) verursachte Änderung der Last oder Induktivität der zweiten Spule (9) verursacht wird.

2. Reifendurchstichdetektionssystem (3) nach Anspruch 1, wobei ein Durchstich in dem Reifen (1) zu einer resistiven Verbindung zwischen der ersten und der zweiten leitfähigen Schicht (6, 7) des Sensors (4) führt, die eine erhöhte Last und eine niedrigere Impedanz in der zweiten Spule (12) verursacht und aufgrund der magnetischen Kopplung zwischen der zweiten Spule (9) und der ersten Spule (12) eine erhöhte Last und eine niedrigere Impedanz in der ersten Spule (12) verursacht, wobei die erhöhte Last und die niedrigere Impedanz in der ersten Spule durch die Induktivitätsmessschaltung (13) detektiert werden.

3. Reifendurchstichdetektionssystem (3) nach Anspruch 1 oder Anspruch 2, wobei die zweite Spule (9) ein erstes Ende (11), das elektrisch mit der ersten leitfähigen Schicht (6) verbunden ist, und ein zweites Ende (10), das elektrisch mit der zweiten leitfähigen Schicht (7) verbunden ist, aufweist.

4. Reifendurchstichdetektionssystem (3) nach einem der Ansprüche 1 bis 3, wobei die zweite Spule (9) eine aus leitfähigem Material gebildete spiralförmige Planarspule ist.

5. Reifendurchstichdetektionssystem (3) nach Anspruch 4, wobei die zweite Spule (9) mit der ersten leitfähigen Schicht (6) komplanar ist.

6. Reifendurchstichdetektionssystem (3) nach einem der Ansprüche 1 bis 5, wobei die zweite Spule (9) auf der elektrisch isolierenden Schicht (8) und in einer Öffnung (19) der ersten leitfähigen Schicht (6) gebildet ist.

7. Reifendurchstichdetektionssystem (3) nach einem der Ansprüche 3 bis 6, wobei das erste Ende (11) der zweiten Spule (9) einstückig mit der ersten leitfähigen Schicht (6) ist.

8. Reifendurchstichdetektionssystem(3) nach einem der Ansprüche 1 bis 7, wobei die erste und die zweite leitfähige Schicht (6, 7) aus elektrisch leitfähigem Gummi gebildet sind und die isolierende Schicht (8) aus elektrisch isolierendem Gummi gebildet ist.

9. Reifendurchstichdetektionssystem (3) nach einem der Ansprüche 1 bis 8, wobei die Induktivitätsmessschaltung (13) ein Induktivität-Digital-Umwandlungsmodul aufweist.

10. Reifendurchstichdetektionssystem (3) nach Anspruch 9, wobei das Induktivität-Digital-Modul dazu ausgebildet ist, Variationen der Induktivität von 10⁻⁴ H und höher zu messen.

11. Reifendurchstichdetektionssystem (3) nach einem der Ansprüche 1 bis 6, wobei die Induktivitätsmessschaltung (13) und die erste Spule (12) in einem Gehäuse eines Elektronikmoduls (14) angeordnet sind.

12. Reifendurchstichdetektionssystem (3) nach einem der Ansprüche 1 bis 7, wobei die erste Spule (12) eine auf einer Oberfläche eines Substrats oder in dem Substrat gebildete spiralförmige Planarspule ist.

13. Reifendurchstichdetektionssystem (3) nach Anspruch 11 oder Anspruch 12, wobei das Elektronikmodul (14) ferner ein oder mehrere Module zum Kontrollieren des Reifendrucks und/oder der Reifentemperatur aufweist.

14. Reifendurchstichdetektionssystem (3) nach einem der Ansprüche 1 bis 13, das ferner einen Sender zum Senden eines Signals aufweist.

15. Reifendurchstichdetektionssystem (3) nach einem der Ansprüche 1 bis 14, das ferner einen pneumatischen Reifen (1) aufweist, wobei der Sensor (4) und die zweite Spule (9) an einer Innenfläche des Reifens (1) angeordnet sind und die erste Spule (12) an einer Innenfläche (17) des Reifens (16) und beabstandet von der ersten Spule (9) positioniert ist, sodass die erste Spule (12) nur magnetisch mit der zweiten Spule (9) gekoppelt ist.

## Revendications

1. Système (3) de détection de crevaison de pneu, comprenant :
un capteur (4) qui se fixe sur le pneu (1) et un système de détection (5),
le capteur (4) comprenant :
une première couche conductrice (6) ;
une deuxième couche conductrice (7) ; et
une couche isolante (8), la couche isolante (8) étant agencée entre la première couche conductrice (6) et la deuxième couche conductrice (7) et
isolant électriquement la première couche conductrice (6) et la deuxième
couche conductrice (7),
**caractérisé en ce que**
le système de détection (5) comprend une configuration de transformateur ayant un enroulement primaire et un enroulement secondaire, l'enroulement primaire étant prévu par une première bobine (12) ayant une première inductance et
l'enroulement secondaire étant prévu par une deuxième bobine (9) ayant une deuxième inductance, la deuxième bobine (9) pouvant être connectée au capteur (4) et étant dimensionnée et mise en forme pour être agencée sur une surface interne du pneu (1), la première bobine (12) étant couplée magnétiquement à la deuxième bobine (9),
le système (3) de détection de crevaison de pneu comprenant en outre un circuit de mesure d'inductance (13) couplé à la première bobine (12),
le circuit de mesure d'inductance (13) étant configuré pour mesurer un changement d'inductance de la première bobine (12) causé par un changement de charge ou d'inductance de la deuxième bobine (9) qui est causé par une crevaison du pneu (1).

2. Système (3) de détection de crevaison de pneu selon la revendication 1, une crevaison du pneu (1) donnant lieu à une connexion résistive entre les première et deuxième couches conductrices (6, 7) du capteur (4) qui a pour conséquences une charge augmentée et une impédance plus faible dans la deuxième bobine (12) et a pour conséquences une charge augmentée et une impédance plus faible dans la première bobine (12) à cause du couplage magnétique entre la deuxième bobine (9) et la première bobine (12), la charge augmentée et l'impédance plus faible dans la première bobine (12) étant détectées par le circuit de mesure d'inductance (13).

3. Système (3) de détection de crevaison de pneu selon la revendication 1 ou la revendication 2, la deuxième bobine (9) ayant une première extrémité (11) connectée électriquement à la première couche conductrice (6) et une deuxième extrémité (10) connectée électriquement à la deuxième couche conductrice (7).

4. Système (3) de détection de crevaison de pneu selon l'une des revendications 1 à 3, la deuxième bobine (9) étant une bobine en spirale plane formée de matériau conducteur.

5. Système (3) de détection de crevaison de pneu selon la revendication 4, la deuxième bobine (9) étant coplanaire avec la première couche conductrice (6).

6. Système (3) de détection de crevaison de pneu selon l'une des revendications 1 à 5, la deuxième bobine (9) étant formée sur la couche isolante (8) électriquement et dans une ouverture (19) de la première couche conductrice (6).

7. Système (3) de détection de crevaison de pneu selon l'une des revendications 3 à 6, la première extrémité (11) de la deuxième bobine (9) faisant partie intégrante de la première couche conductrice (6).

8. Système (3) de détection de crevaison de pneu selon l'une des revendications 1 à 7, les première et deuxième couches conductrices (6, 7) étant formées à partir de caoutchouc conducteur électriquement et la couche isolante (8) étant formée à partir de caoutchouc isolant électriquement.

9. Système (3) de détection de crevaison de pneu selon l'une des revendications 1 à 8, le circuit de mesure d'inductance (13) comprenant un module de conversion inductance-numérique.

10. Système (3) de détection de crevaison de pneu selon la revendication 9, le module inductance-numérique étant configuré pour mesurer des variations d'inductance de 10⁻⁴ H ou plus.

11. Système (3) de détection de crevaison de pneu selon l'une des revendications 1 à 6, le circuit de mesure d'inductance (13) et la première bobine (12) étant agencés dans un boîtier d'un module électronique (14).

12. Système (3) de détection de crevaison de pneu selon l'une des revendications 1 à 7, la première bobine (12) étant une bobine en spirale plane formée sur une surface d'un substrat ou dans le substrat.

13. Système (3) de détection de crevaison de pneu selon la revendication 11 ou la revendication 12, le module électronique (14) comprenant en outre un ou plusieurs modules de surveillance de pression de pneu et/ou de température de pneu.

14. Système (3) de détection de crevaison de pneu selon l'une des revendications 1 à 13, comprenant en outre un émetteur pour émettre un signal.

15. Système (3) de détection de crevaison de pneu selon l'une des revendications 1 à 14, comprenant en outre un pneu pneumatique (1), le capteur (4) et la deuxième bobine (9) étant agencés sur une surface interne du pneu (1) et la première bobine (12) étant positionnée sur une surface interne (17) du pneu (1) et espacée de la première bobine (9) de sorte que la première bobine (12) est uniquement couplée magnétique à la deuxième bobine (9).
